Europäisches Patentamt

European Patent Office

Office européen des brevets

(11) Veröffentlichungsnummer: **0 474 326 A2**

## EUROPÄISCHE PATENTANMELDUNG

(21) Anmeldenummer: **91250246.5**

(51) Int. Cl.5: **F25D 17/04**

(22) Anmeldetag: **08.09.91**

(30) Priorität: **07.09.90 IT 250990**
**12.11.90 IT 251190**
**02.04.91**

(43) Veröffentlichungstag der Anmeldung:
**11.03.92 Patentblatt 92/11**

(84) Benannte Vertragsstaaten:
**AT BE CH DE DK ES FR GB GR IT LI LU NL SE**

(71) Anmelder: **S.A.V.A. SOCIETA PER LE
APPLICAZIONI DEL VUOTO ATMOSFERICO
Via 1. Maggio, 11
I-32030 Arsie'(Belluno)(IT)**

(72) Erfinder: **Dall'Agnol, Dario
11, Via I. Maggio
I-32030 Arsie', (Belluno)(IT)**

(74) Vertreter: **Wablat, Wolfgang
Patentanwalt Dr.-Ing. Dr. jur. Dipl.-Chem. W.
Wablat Potsdamer Chaussee 47
W-1000 Berlin 38(DE)**

(54) **Zelle für die Konservierung von verderblichen Produkten.**

(57) Die Erfindung betrifft eine Zelle für die Konservierung von verderblichen Produkten mit einer dem Kühlkreislauf untergeordneten Vakuumanlage, mit Differential-Vakuumregler und mit einer Einrichtung für den Einsatz des Vakuums in außerhalb der Zelle befindlichen Behältern.

Diese Zelle besteht im wesentlichen aus einem schachtelförmigen Gehäuse, das mit einer hermetisch verschließbaren und thermisch isolierten Türe versehen ist, in welches ein herkömmlicher Kühlkreisumlauf eingebaut ist, zusammen mit einer Vakuumanlage, die mit ihm in elektrischer Verbindung steht, um den Betrieb der Vakuumanlage den Kühlverhältnissen unterzuordnen mit der Möglichkeit, in der Zelle die gewünschten thermischen und Unterdruckverhältnisse wiederholt zu erzeugen, so daß in derselben Zelle vorzugsweise mit der Vakuumtechnik, verderbliche Produkte aufbewahrt werden können, die sonst in Behälter eingeschlossen werden müßten, welche nur einmal wieder geöffnet werden können, da die Vakuumanlage vom gleichen entsprechend abgeänderten Kapselkompressor bedient wird und eine geeignete Vorrichtung besitzt, um die Vakuumverhältnisse konstant zu halten sowie die Möglichkeit zu schaffen, die Vakuumanlage auch außerhalb der Zelle zu verwenden.

EP 0 474 326 A2

Die Erfindung bezieht sich auf eine Zelle für die Konservierung von verderblichen Produkten, mit einer Vakuumanlage, um geeignete atmosphärische Unterdrucksverhältnisse herzustellen und zu erhalten, sowie mit einer herkömmlichen Kühlanlage, wobei der Vakuumkreislauf dem Kühlumlauf untergeordnet ist.

Dabei besteht die Möglichkeit, für die verschiedenen Anlagen auch nur einen einzigen, dazu geeigneten hermetisch abgeschlossenen Kompressor einzusetzen.

Weiterhin kann ein gleichbleibender optimaler Unterdruckwert durch einen Differenzialvakuumregler erhalten bleiben. Die Anlage ermöglicht außerdem den Einsatz des so erreichten Unterdrucks auch für andere zusätzliche Zwecke.

Für die Konservierung von Lebensmitteln oder sonstwie verderblichen Waren ist es zur Zeit möglich, sich der Kühl- oder der Vakuumtechnik zu bedienen. Es ist bekannt, daß die niederen Temperaturen eine Verlangsamung der Oxydationserscheinungen und der enzymatischen Reaktionen bewirken und somit die Verderblichkeit herabsetzen, während das atmosphärische Vakuum insbesondere die Bildung von Hefen und Schimmelpilzen verhindert.

Die Vakuumtechnik wird zur Zeit mit verschiedenen spezifischen Mitteln auf industrieller Ebene, sowie auch im Haushalt angewandt. Auf industrieller Ebene werden vorzugsweise verformbare Behältnisse verwendet, aus denen mittels geeigneten Vakuumpumpen die Luft herausgesaugt wird oder, falls es sich um zerdrückbare Produkte handelt, Inert- oder konservierende Gase hineingepumpt werden, um den äußeren atmosphärischen Druck auszugleichen. Die Behältnisse werden dann hermetisch verschlossen und für die mittlere oder längere Aufbewahrungszeit in Kühlzellen gelagert.

Im Haushalt oder in landwirtschaftlichen Betrieben wird die Aufbewahrung unter Vakuum wie folgt gehandhabt: Die bereits mit den zu konservierenden Produkten gefüllten Behälter werden in ein 80 bis 100 °C warmes Wasserbad gelegt und dann bei dieser Temperatur verschlossen. Beim Erkalten sinkt die Wasserdampfspannung von 1013 Millibar bei Siedetemperatur auf 23 Millibar bei 20°C, womit in den Behältern ein Unterdruck oder relatives Vakuum entsteht.

Dieses Vorgehen hat den Vorteil, daß die weitere Aufbewahrung bei Umwelttemperatur geschehen kann, anstatt in einer Kühlzelle. Es hat aber den Nachteil, daß es für jene Produkte nicht angewandt werden kann, welche den hohen Temperaturen nicht ausgesetzt werden dürfen.

Weiterhin hat es eine beschränkte Wirkung, weil nur der Teildruck des Wasserdampfes vermindert wird, während die Teildrücke der anderen Gase sich praktisch nicht ändern. Nicht unerwähnt bleiben sollen die Ungewißheit im Festlegen der Zeiten und die Vorbereitungsbedingungen mit der folglich hohen Anzahl von Behältern, in denen sich kein Vakuum gebildet hat, sowie die Schwierigkeit, mit den heißen Behältern umzugehen, mit der Gefahr von Brüchen und Unfällen.

Aber der hauptsächlichste Nachteil aller Vakuumverpackungen liegt darin, daß es nicht möglich ist, das Vakuum wieder herzustellen, nachdem das Behältnis geöffnet worden ist. Das bedingt die Notwendigkeit, kleine Behälter zu verwenden, welche in kurzer Zeit entleert werden müssen. Daraus ergeben sich höhere Kosten, mehr Ausschuß und mehr Wegwerfmaterial.

Ein weiterer Nachteil der derzeitigen Vakuumtechnik ergibt sich aus den hohen Kosten der notwendigen Einrichtungen für die Messung und die Kontrolle des Unterdruckes, falls eine hohe Sensibilität verlangt wird, um die Druckverschiebungen in Grenzen weniger Millibare zu erhalten, damit optimale Konservierungsbedingungen gewährleistet sind.

Bekanntlich ist es mit der Kältetechnik möglich, verderbliche Güter verschieden lange Zeit aufzubewahren, je nach der Temperatur, der sie ausgesetzt werden.

Für kürzere Zeiten handelt es sich um Temperaturen knapp über 0°C, während für mittlere oder längere Zeiten tiefere Temperaturen bis zum Einfrieren verwendet werden.

Das Tiefkühlen hat aber seinerseits den Nachteil, daß das Wasser in den Geweben kristallisiert, was den Aufbau der Zellen beschädigt. Beim Auftauen verliert das Produkt mit dem Wasser auch Mineralsalze, wasserlösliche Vitamine und Aromen, wodurch es seine organoleptischen Eigenschaften verliert und außerdem nicht wieder eingefroren werden kann. Ein weiterer Nachteil der Tiefkühlung sind die hohen energetischen Kosten für die Erhaltung der Kälte und die Unmöglichkeit des erneut Einfrierens.

Die vorliegende Erfindung basiert auf der Idee, eine Anlage zu entwickeln, welche die Vorteile der Auswirkungen des Vakuums mit den Vorteilen der Auswirkungen der Kälte verbinden soll. Damit fällt die Notwendigkeit dahin, kleine Behälter zu verwenden, mit den Vorteilen einer Anlage mit niederem Kostenaufwand. Hauptziel dieser Erfindung ist es nämlich, eine synergetische Wirkung zu erreichen durch die Vereinigung der bekannten Konservierungstechniken mit einem Maximum an Aufbewahrungszeit sowie mit einer Einrichtung, welche die Erzeugung und Wiederherstellung von Vakuum in einer Kühlzelle zuläßt, zusammen mit der Möglichkeit, darin Konservierungsgase einzuführen.

Ein weiteres Ziel dieser Erfindung ist es, die Konservierung unter Vakuum von Produkten weiterzuführen, deren Behälter geöffnet und somit der Umluft ausgesetzt worden sind, da das Vakuum erneut hergestellt werden kann. Das erlaubt den Einsatz von Behältern beliebiger Größe, aus denen konservierte Produkte auch teilweise herausgenommen oder zusätzlich frische Produkte eingefüllt werden können.

Ein Ziel der vorliegenden Erfindung ist es, die Notwendigkeit des Einsatzes kleiner Behälter herabzusetzen, deren Kosten ganz erheblich auf den Gesamtkosten der Produkte lasten. Weiteres Ziel dieser Erfindung ist es, die Konservierung unter Vakuum von Produkten weiterzuführen, deren Behälter geöffnet und somit der Umluft ausgesetzt worden sind, da das Vakuum erneut hergestellt werden kann. Dadurch können Behälter beliebiger Größe eingesetzt werden, aus denen die konservierten Produkte herausgenommen oder zusätzliche frische Produkte eingefüllt werden können.

Ein weiteres Ziel der vorliegenden Erfindung ist es, die Einsatznotwendigkeit kleiner Behälter herabzusetzen, da ihre Kosten ganz erheblich auf den Gesamtkosten der konservierten Produkte lasten.

Von dieser Erfindung angestrebt ist auch die Möglichkeit, die Vakuumtechnik einzusetzen, um in den herkömmlichen Behältern zur Aufbewahrung unter Umwelttemperatur Unterdruckverhältnisse zu schaffen und wieder herzustellen, so z. B. für Haushaltprodukte, und außerdem den Unterdruck für jede andere Möglichkeit und lohnenden Einsatz zu verwenden.

Ebenso bezweckt die vorliegende Erfindung, die energetischen Kosten für die Konservierung auf ein Mindestmaß herabzusetzen, indem die Notwendigkeit von Tiefkühltemperaturen für die Aufbewahrung auf mittlere oder längere Zeit herabgesetzt wird.

Nicht zuletzt bezweckt diese Erfindung, eine Vorrichtung einzusetzen, mit welcher der absolute Druck reguliert und kontrolliert werden kann. Ist in der Anlage einmal ein optimaler Druck oder Unterdruck festgelegt, soll diese Vorrichtung seine Erhaltung gewährleisten, innerhalb einer festgelegten Sensibilität und mit sehr reduzierten Kosten.

Diese und andere Zwecke werden mit der vorliegenden Erfindung tatsächlich einwandfrei erreicht, was aus der nachfolgenden Beschreibung einer seiner als rein hinweisend und unbegrenzt zu verstehenden Konstruktionslösung hervorgeht, sowie auch aus 7 schematischen Zeichnungen.

Fig. 1) zeigt ein praktisches Schema einer vorgenannten Aufbewahrungszeile, komplett mit den Gruppen der Haupt- und und der Zusatzeinrichtungen;

Fig. 2) auf stellt den vertikalen Schnitt einer möglichen Konstruktionsform einer genannten Zelle dar, unter Einschluß eines Zusammenbauschemas der pneumatischen Vorrichtung zur Herstellung des Vakuums und des hydraulischen Kühlkreislaufes;

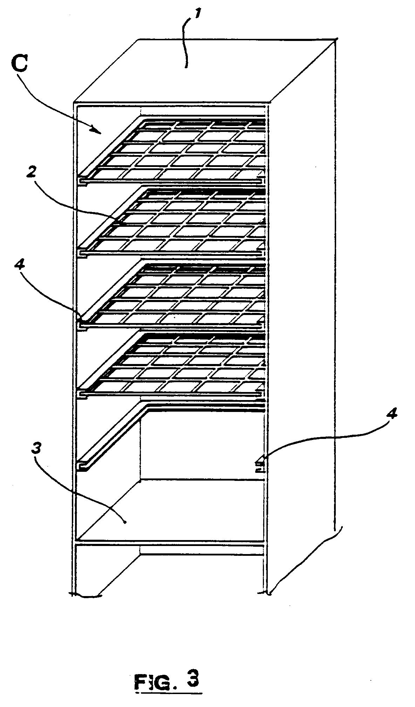

Fig. 3) zeigt eine perspektivische Teilansicht der Tragkonstruktion der genannten Zelle;

Fig. 4) zeigt ein praktisches Schema eines Kapselkompressors mit der zweckmäßigen Abänderung, damit er auch als Vakuumpumpe eingesetzt werden kann;

Fig. 5) zeigt einen vertikalen Schnitt einer Zusatzeinrichtung, womit die pneumatische Vorrichtung der Zelle für die Herstellung von Vakuum auch in Behältern außerhalb der Zelle eingesetzt werden kann;

Fig. 6) zeigt eine vertikalen Schnitt einer weiteren Zusatzeinrichtung, welche an die Vakuumanlage der Zelle angebracht werden kann;

Fig. 7) zeigt ein praktisches Schema der Kontroll- und Reguliereinrichtung für jede Abweichung von einem festgelegten Wert des absoluten Druckes.

In allen Figuren sind oder verstehen sich die gleichen Einzelheiten mit der gleichen Bezugsnummer bezeichnet.

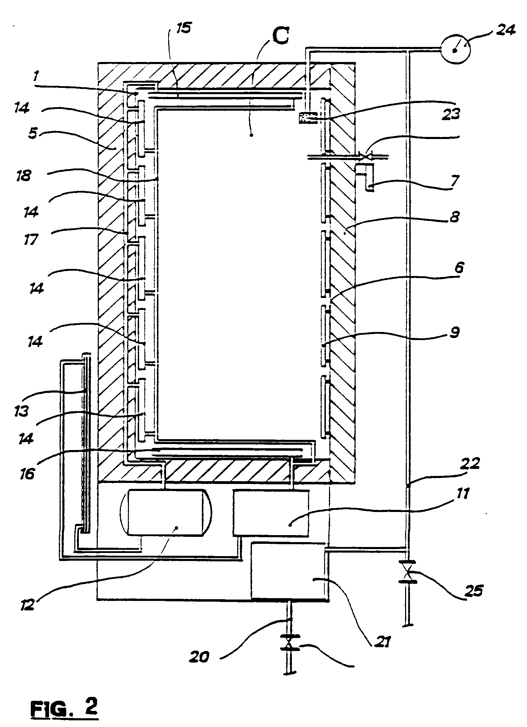

Die konstruktive Lösung für die Zelle (C), hinweisend dargestellt in den Figuren 2) und 3), besteht aus einem kastenartigen Gehäuse (1) ausgerüstet mit einer Reihe von Rosten (2), mit einem Boden (3) unter welchem die Kompressorgruppe (11) und der Behälter (12) des Kühlkreislaufes, sowie die Pumpe 21) der Vakuumanlage, die Vakuumregler, die Elektroventile und der elektronische Schaltkreis untergebracht sind.

Die Tragkonstruktion (1) ist zur Halterung der Roste mit sachdienlichen thermisch isolierten Führungen (4) ausgerüstet, welche auch als Versteifung für die Festigkeit des Gehäuses (1) gegen den äußeren Druck dienen. Das Gehäuse (1) hat eine zweckmäßige thermische Isolierung (5).

Das Gehäuse (1) ist mit Scharnieren für die hermetisch abschließbare Türe versehen, welche mit einem Griff (7) und einer thermischen Isolation (8) ausgerüstet ist.

Die Zelle (C) wird durch einen herkömmlichen Kühlkreislauf gekühlt. Dieser besteht aus einem Kompressor (11), der einen Kondensator (13) speist, welcher mit dem Behälter (12) für die Kühlflüssigkeit in Verbindung steht, und eine Reihe von Verdampfungspaneelen (14a, 14 b, 14 c, 14 d und 14 e) versorgt, die an den Seitenwänden des Gehäuses (1) befestigt sind, sowie auch die Decken- und Bodenpaneele (15) und (16) der Zelle (C).

Diese Kühlpaneele haben eine Zufuhr- und eine Rückfuhrleitung vom und zum Kompressor (11).

Die Zelle (C) kann nicht nur gekühlt, sondern auch mit einer Vakuumanlage, unter Vakuum gesetzt werden, die aus einer Pumpe (21) besteht, welche durch die Leitung (22) mit der Zelle (C) in Verbindung steht. Diese Leitung wird an der Einmündung in die Zelle (C) vorteilhaft mit einem Filter (23) versehen.

An die Leitung (22) ist ein Vakuummeter (24) angebracht, um den in der Zelle (C) herrschenden Unterdruck zu messen, außerdem auch eine Vakuumregler (30) mit fester Tarierung, sowie ein Differential-Vakuumregler (36), welche im weiteren näher beschrieben werden und welche die Unterdruckschwankungen in der Zelle (C) kontrollieren und ausgleichen.

Die Vakuumanlage ist außerdem noch mit einem Ventil (25) nach außen versehen. Auf dem Türgriff (7) ist eine Verbindung zu einem Ventil (26) angebracht, um in der Zelle (C) den Umweltdruck schnell wieder herzustellen, damit die Türe (6) geöffnet werden kann.

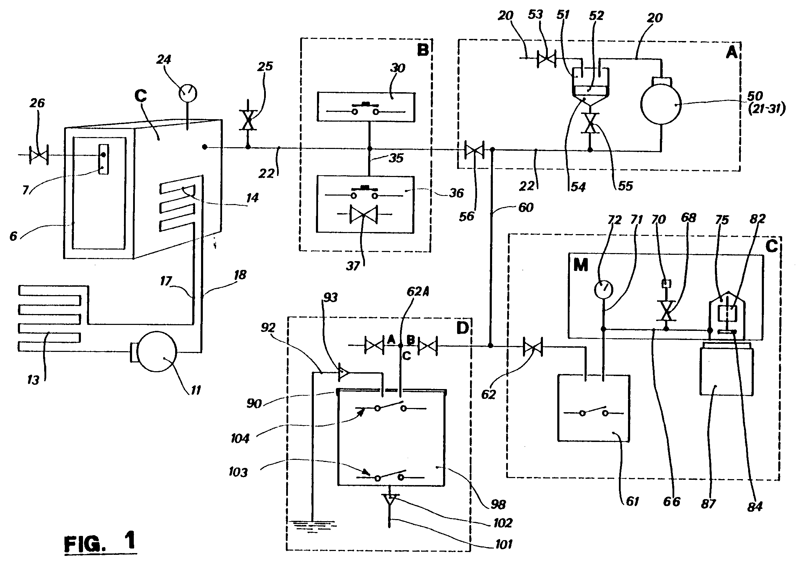

Außer dem oben beschriebenen allgemeinen Teil wurden bei der Realisierung der obigen Anlage noch weitere Elemente und verschiedene Verwendungsarten in Betracht gezogen, welche besser beschrieben werden können, indem man die dargestellten Teile, insbesondere jene des allgemeinen Schemas der Fig. 1, in folgende Abschnitte einteilt:

A) System zur Erzeugung des Vakuums;
B) Pneumatisches Kontroll- und Schaltsystem;
C) Verwendung außerhalb der Zelle;
D) Weitere Verwendung außerhalb der Zelle

## A) SYSTEM ZUR ERZEUGUNG DES VAKUUMS

Die optimalen Unterdruckverhältnisse in einer Zelle, wie der oben beschriebenen, müssen derart sein, daß das maximal mögliche Vakuum erreicht wird, wobei das in den Produkten frei vorhandene Wasser nicht zum Sieden kommen darf.

Bei der Emittlung des maximal zu erreichenden Unterdruckes geht man vorsichtigerweise davon aus, daß die Zelle im Stande sein soll, auch nur als nicht gekühlte Vakuumzelle zu arbeiten, ohne daß sich unerwünschte Nebenwirkungen ergeben.

Die Unterdruckverhältnisse sollen deshalb derart festgelegt werden, daß das Wasser auch bei einer vorausgesehenen maximalen Sommer-Umwelttemperatur von angenommen 30°C nicht zum Sieden kommt, was beim gesättigten Wasserdampf einem Druck von 40 Millibar entspricht, der folglich als Bezugsdruck für den Betrieb der Zelle unter Vakuum angenommen werden kann.

Derartige Unterdruckverhältnisse können beim derzeitigen Stand der Technik leicht erreicht und kontrolliert werden, und zwar mit Hilfe von Pumpen, welche ein bestes Restvakuum von 40 Millibar aufweisen und welche von einem Vakuumregler mit absolutem Wert kontrolliert werden, der die Pumpe beim Erreichen des gewünschten Unterdrucks abstellt und im Falle der Druckerhöhung wieder anstellt.

Diese Lösung weist jedoch Nachteile auf, und zwar erstens die hohen Kosten des Pumpen-Vakuumregler-Systems, weiterhin der hohe Lärmpegel der Pumpe, was den Einbau in eine bewohnte Umwelt verunmöglicht.

Mit der vorliegenden Erfindung will man ein System zur Erzeugung von Vakuum schaffen, bei welchem die geeigneten Werte für diesen Gebrauch erreicht werden, das wenig Lärm erzeugt und dessen Kosten begrenzt sind. Es besteht darin, daß ein Kapselkompressor, wie man ihn in der Kühltechnik verwendet, so abgeändert wird, daß er auch als Vakuumpumpe eingesetzt werden kann.

Der herkömmliche Kapselkompressor erreicht in der Tat beim Ansaugkollektor einen maximalen Unterdruck von 40 Millibar, aber es ist ein Gerät, welches für einen geschlossenen Kreislauf geschaffen ist, weil sonst die Möglichkeit des Festfressens bestünde, da das vom Ablauf verlorene Schmieröl nicht mehr in den Motor zurückfließt.

Die hier vorgeschlagene Umänderung betrifft das Anbringen von drei direkt wirkenden Elektroventilen, das erste zwischen dem Ausflußrohr (20) und dem Ansaugkollektor (22), das zweite auf den Ansauggkollektor (22) und das dritte auf das Ausflußrohr (20) unterhalb der Einsatzstelle des ersten, alle drei mit einem Zeitschaltkreis gesteuert. Dieser öffnet das erste Elektroventil für einige Sekungen vor und nach der Laufzeit des Kompressors. Damit wird das ausgeflossene Schmieröl wieder in den Ansaugkollektor eingeführt. Die beiden anderen werden vom Zeitschaltkreis nur dann geöffnet, wenn das erste geschlossen ist.

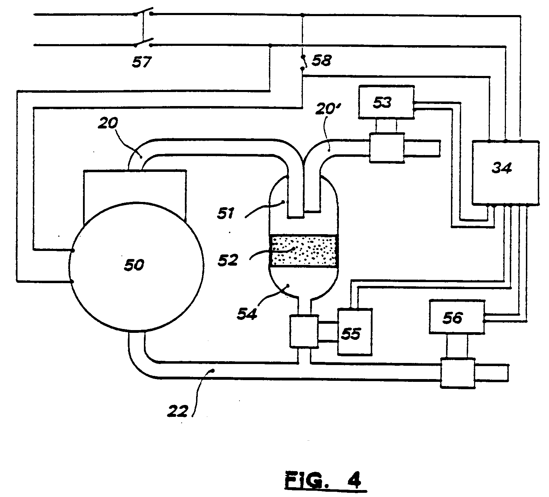

Mit Bezug auf die Fig. 4 eingehender erklärt, wird auf dem Abflußrohr (20) des Kapselkompressors/Vakuumpumpe (50) ein Sammelgefäß (51) angebracht, eventuell mit einem Filter (52) und unterhalb befindlichem Trichter (54), welcher mit einem normalerweise geschlossenen Elektroventil (55) in Verbindung steht. Das Abflußrohr (20) ist innerhalb des Sammelgefäßes (51) solcherart geformt, daß durch die Einwirkung der Schwerkraft das vom Kompressor (50) ausfließende flüssige Öl vom ebenfalls austretenden luftförmigen Stoff getrennt wird, auf den Filter (52) fällt und sich im untenstehenden Trichter (54) sammelt, während der luftförmige Stoff über die Leitung (20) wieder aus dem Sammelgefäß ausströmt. Das alles dient dem Zweck, das aus dem Abfluß austretende Schmieröl zu trennen, zu sammeln und momentan zurückzuhalten, und es dann durch Öffnen des Elektroventils (55) wieder in die Leitung (22) zurückzuführen.

Auf der Ansaugleitung (22) und auf dem Ausflußrohr (20) sind auf der einen das Elektroventil (56), auf dem anderen das Elektroventil (53) angebracht, welche die Pumpe (50) abriegeln.

Ein Zeitschaltregler steuert die Elektroventile (53), (55) und (56), sowie die Pumpe (50).

Durch Einschalten des Hauptschalters (57) wird der Zeitschaltregler (34) gespeist und nimmt Wartestellung ein.

Mit dem Schalter (58) wird die Pumpe (50) in Betrieb gesetzt und gleichzeitig der Zeitregler (34) angeregt. Dieser öffnet für einige Sekunden das Elektroventil (55), so daß das vorher aus dem Kompressor (50) ausgetretene und im Sammelbehälter (51) angesammelte Öl in die Leitung (22) gesogen wird, da gleichzeitig die Elektroventile (56) und (53) geschlossen sind. In dieser Phase dreht der Kompressor (50) leer, so daß der Motor nicht bei Vollast anlaufen muß.

Nach einigen Sekunden wird durch den Zeitregler (34) das Elektroventil (55) geschlossen und die Elektroventile (53) und (56) geöffnet, während der Kompressor (50) in Betrieb bleibt. Die Luft wird jetzt von der Leitung (22) angesaugt und strömt durch das Abflußrohr (29), während das aus dem Abfluß austretende Öl schwerkreftbedingt in den Sammelbehälter fließt und sich dort ansammelt.

Ist die auf dem Zeitregler (34) eingestellte Zeit abgelaufen, stellt er die Pumpe (50) ab, schließt gleichzeitig die Elektroventile (53) und (56) und öffnet für einige Sekunden das Elekroventil (55). Dadurch wird der Druck vor und nach dem Kompressor wieder ausgeglichen und das im Sammelbehälter (51) befindliche Öl fließt in die Leitung (22), womit ein Festfressen des Kapselkompressors (50) verhindert wird.

Weil die Elektroventile (53), (55) und (56) normalerweise geschlossen sind, bleiben die Druckverhältnisse in der Anlage, an der die Leitungen (20) und (22) angeschlossen sind, auch im Falle von Fehlschaltungen und bei eventuellem Stromausfall erhalten.

Falls der Kompressor nur mit Druck oder nur mit Unterdruck arbeitet, kann das auf dem Kollektor angebrachte Elektroventil, das ständig unter Normaldruck steht, ausgeschaltet werden.

Der so abgeänderte Kapselkompressor (50) funktioniert einwandfrei, auch bei offenem Kreislauf, als Vakuumpumpe und ist im Stande, ein maximales Vakuum von ca. 40 Millibar zu erzeugen. Wie beschrieben, ist dieser Wert ideal im Einsatz einer Vakuumzelle für die Konservierung von verderblichen Produkten.

B) PNEUMATISCHES KONTROLL-UND SCHALTSYSTEM

Unter Kontroll- und Schaltsystem versteht man die Gesamtheit der elektrischen, mechanischen und pneumatischen Elemente, welche dazu befähigt sind, in der Zelle optimale Vakuumverhältnisse zu schaffen und zu erhalten, um die darin befindlichen Produkte zu erhalten.

Um in der Zelle (C) einen optimalen Druck von 40 Millibar zu erreichen, kann man eine Vakuumpumpe mit bestem Endwert von 40 Millibar einsetzen, welche von einem Vakuumregler mit absolutem Wert kontrolliert wird, oder aber, wie oben beschrieben, einen abgeänderten Kapselkompressor, welcher bei Dauerbetrieb am Ansaugkollektor einen günstigsten Unterdruck von 40 Millibar erreicht.

Wählt man aus Kostengründen diese letztere Lösung, so kann auf die Zelle der Kompressor (50) angebracht werden, komplett mit Sammelbehälter (51), Filter (52) und darunter angebrachtem Trichter (54), welcher in das Elektroventil (55) mündet, aber ohne Elektroventil (56), weil es überflüssig ist, da die Leitung (20) immer unter Normaldruck steht.

Der Zeitregler (34), der die Elektroventile (53) und (55) und die Pumpe (50) steuert, wird ein für alle Mal auf die vorgesehene Betriebsdauer der Pumpe eingestellt, wobei die Betriebsdauer aufgrund des Volumens der Zelle (C) und die Leistung der Pumpe (50) festgelegt wird.

Der Zeitregler (34) wird also, einmal angesprochen, die Pumpe (50) solange in Betrieb setzen, daß der minimale Restdruck, unter den die Pumpe (50) nicht gehen kann, in der Zelle (C) bestehen bleibt, auch wenn die Pumpe (50) abgestellt wird. Für diese Lösung beträgt dieser Druck etwa 40 Millibar.

Der Zeitregler (34) kann durch das Schließen der Türe (6) der Zelle (C), durch das Abschalten des Kühlkreislaufes oder durch den Differential-Vakuumregler angelassen werden, falls sich in der Zelle (C) durch pneumatische Verluste des Systems oder durch Verdampfung der aufbewahrten Produkte, eine Druckerhöhung ergibt.

Derselbe Zeitregler (34) wird durch die Position "offen" der Türe (6), durch die Postition "ein" des Kühlkompressors (11) durch die Position "offen" eines festeingestelltn Druckreglers (30) außer Betrieb gesetzt. Dieser Druckregler (30) ist auf einen angenommenen Druck von 500 Millibar eingestellt, so daß das Abschalten des Kühlkompressors, falls dieser anlaufen sollte, während die Zelle (C) im Unterdruck steht, nicht unnötigerweise die Vakuumpumpe (50) oder (21) in Betrieb setzt.

Der Vakuumregler (36) hat die Aufgabe, den in der Zelle (C) erreichten Druck wahrzunehmen, sobald die Vakuumpumpe abstellt, während ihn der absolute Wert dieses Druckes nicht interessiert; er tritt auch nur in Funktion, wenn sich in der Zelle (C) eine vorher bestimmte Druckerhöhung ergibt, wobei er den Impuls für die Inbetriebsetzung der Vakuumpumpe erteilt.

Die Inbetriebsetzung erfolgt durch den Zeitregler (34) mit einer vorbestimmten Verzögerung, welche jedoch geringer ist als jene, der von der Schließung der Tür (6) bestimmten Zeit, weil die Zelle bereits unter Vakuum steht. Am Ende der Einschaltzeit wird die Pumpe in der Zelle bereits wieder den maximalen Unterdruck geschaffen haben, den sie zu erzeugen im Stande ist.

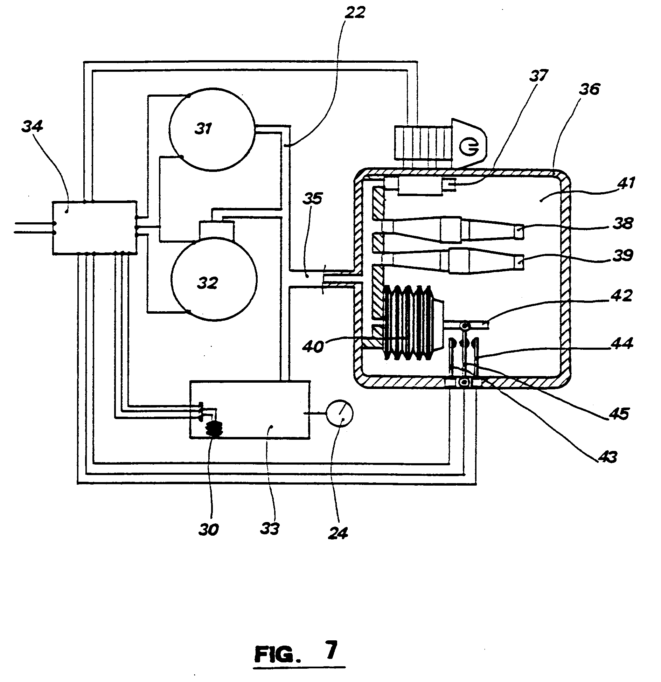

In Fig. 7 wird eine neuere Lösung für den Differential-Vakuumregler (36) vorgeschlagen, in einer rein vereinfachten schematischen Darstellung und losgelöst vom übrigen Schema der Fig. 1, weil die gleiche Vorrichtung, obwohl sie das spezifische Problem der Vakuumanlage löst, welche einen Teil der vorliegenden Erfindung darstellt, auch vorteilhafterweise für andere pneumatische Zwecke eingesetzt werden kann.

In der vorgenannten Fig. 7 sind zwei gegensätzliche Elemente dargestellt, der Kompressor (31) und die Vakuumpumpe (32), welche miteinander und mit der Kammer (33) durch die übliche Leitung (22) verbunden sind.

In der Kammer (33), befindet sich ein Druckregler mit fester Eichung (30), welcher die bereits beschriebene Aufgabe hat, dem Zeitregler (34) zu melden, wenn der Druck sich außerhalb der vorbestimmten Grenzen bewegt, damit dieser einschreitet, um den Kompressor (31) abzustellen, wenn der Druckwert die Tarierung überschreitet, oder um die Vakuumpumpe in Betrieb zu setzen, wenn der eingestellte Unterdruckwert nicht vorhanden ist.

Von der Leitung (22) aus geht die Leitung (35), welche mit dem direkt wirkenden Elektroventil (37), den mechanischen Bypass-Ventilen (38) und (39) und einem druckempfindlichen Element (40) verbunden ist.

Das Elektroventil (37), die mechanischen Ventile (38) und (39) und das druckempfindliche Element (40) sind auf der einen Seite mit dem im Kollektor (35) befindlichen Druck und auf der anderen Seite mit dem Druck des Hohlraumes (41) im Gehäuse (36) verbunden.

Das druckempfindliche Element (40), das in Form eines Balges dargestellt wird, hat einen Hebel (42), der einen auf die Kontakte (43) und (44) wirkenden Umschalter (45) betätigt, während das Elektroventil (37) durch den Zeitregler (34) parallel mit den aktiven Elementen (31) und/oder (32) geschaltet ist.

Wird eines der aktiven Elemente, der Kompressor (31) oder die Vakuumpumpe (32), in Betrieb gesetzt, bilden sich in der Zelle (33) neue Druckverhältnisse, was mit dem Mano-Vakuummeter festgestellt werden kann.

Parallel mit dem Kompressor (31) oder der Pumpe (32) geschaltet, öffnet der Zeitregler (34) das Elektroventil (37), so daß in der Kammer (41) jederzeit ein gleicher Druck herrscht, wie in der übrigen Anlage.

Ist die im Zeitregler (34) eingestellte Zeit abgelaufen, so wird der Kompressor (31) oder die Pumpe (32) abgestellt, unabhängig vom erreichten absoluten Druckwert, gleichzeitig schließt sich das Elektroventil (37), womit in der hermetischen Kammer (41) ein identischer Druck eingefangen bleibt, wie er in der übrigen Anlage herrscht.

Eine eventuelle positive oder negative Druckänderung in der Zelle (33), wirkt durch die Leitung (35) auf den Balg (40) ein, der sich bei positiver Änderung ausdehnt und sich bei negativer Änderung zusammenzieht, dies aufgrund des Unterschiedes mit dem immer gleichbleibenden Druck der Kammer (41); dadurch wird der Hebel (43) veranlaßt, den Umschalter (45) gegen den Kontakt (44) oder Kontakt (43) hin zu bewegen.

Durch die Kontakte (43) oder (44) wird ein elektrischer Impuls zum Zeitregler (34) gesandt, der die Pumpe (32) oder den Kompressor (31) in Betrieb setzt, und zwar für eine vorher bestimmte und auf dem Zeitregler eingestellte Zeit, das Elektroventil (37) wird wieder geöffnet, damit, nachdem der Motor wieder abgestellt wurde, in der Kammer (41) der neue Druckwert erhalten bleibt.

Die mechanischen Ventile (38) und (39) sind im antiparallelen Sinn montiert und auf leicht höhere Werte geeicht, als jene des differenzierten Ausschlages, der das sensible Element (40) bewegt, eine Sicherheitsmaßnahme, welche den Zu- oder Abfluß von Luft erlaubt, falls das Elektroventil (37) sich nicht rechtzeitig öffnen sollte, und die eine allzu große Druckdifferenz zwischen der Außen- und Innenwand des sensiblen Elements (40) verhindert, was dieses beschädigen könnte; diese Ventile sind überflüssig, wenn das druckempfindliche Element genügend kräftig gebaut ist.

Eine angemessene Kombination der Eigenschaften des druckempfindlichen Elements (40) mit den Ausmaßen der Kammer (41), ergibt den zweckmäßigsten Druckunterschiedswert für den Einsatz des vorgenannten Differential-Druckreglers, sei es im Bereich der vorliegenden Konservierungsanlage, sei es in anderen Systemen für die pneumatische Druck- oder Unterdruckkontrolle.

Gemäß einer bevorzugten Konstruktionslösung der vorliegenden Erfindung, erlaubt die Verbindung des abgeänderten Kapselkompressor (50) mit dem Differential-Vakuumregler (36), eine Vorrichtung zu bauen, welche imstande ist, in einer Konservierungszelle (C) einen Restdruck von etwa 40 bis 50 Millibar zu schaffen und zu erhalten, der dazu geeignet ist, die angegebenen Zwecke zu erreichen, insbesondere in Bezug auf die Vereinigung der Vorteile der Kälte- und der Vakuumtechnik.

Es sei noch hervorgehoben, daß mit einigen geeigneten logischen Änderungen der elektrischen Schaltung, die in Bezug stehende Zelle vorteilhaft in den folgenden Fällen eingesetzt werden kann:

a) Betrieb der Zelle nur als Vakuumzelle unter Ausschluß der Kühlanlage;

b) Betrieb nur der Kühlanlage unter Ausschluß der Vakuumanlage;

c) gleichzeitiger Betrieb beider Anlagen mit der der Kühlanlage untergeordneten Vakuumanlage, wie bisher beschrieben;

d) Möglichkeit der Immission von konservierenden oder inerten Gase, für die Funktionen a) und c).

Es wird weiterhin hervorgehoben, daß im Falle c) die Vakuumanlage dem Kühlkreislauf untergeordnet ist, weil er hier konvektive Bewegungen der Luft verursacht, um der Zelle die Wärme zu entziehen, weshalb die Vakuumanlage erst in Betrieb geht, wenn die gewollte niedere Temperatur erreicht ist. Eine weitere Inbetriebnahme des Kühlkreislaufes, bei bereits dem Unterdruck ausgesetzter Zelle, wird gleichermaßen Wärme entziehen, wenn auch mit weniger Leistung, sei es mit den konvektiven Bewegungen der Luft, sei es durch die Ableitung mittels der Kühlschlangen, welche auf den Rosten angebracht sind oder auch durch die Ausstrahlung der Paneele (14), (15) und (16).

## C) VERWENDUNG AUSSERHALB DER ZELLE

Außer dem bisher Beschriebenen, bietet die Zelle der vorliegenden Erfindung auch die Möglichkeit, die in der oben beschriebenen Anlage angebrachte Vakuumpumpe auch für Behälter einzusetzen, welche zur Aufbewahrung von verderblichen Produkten bei Umwelttemperatur dienen, wie z. B. Produkte für den Gebrauch im Haushalt, indem mit einer Einrichtung, die zweckmäßig mit der Hauptanlage verbunden ist, außerhalb der Zelle gearbeitet wird.

Diese Einrichtung ermöglicht, in einem außerhalb stehenden Behälter die Unterdruckverhältnisse wieder herzustellen, so daß man das Produkt jederzeit bei Umwelttemperatur konservieren kann, mit der Öffnung des Behälters, der Entnahme oder der Hinzufügung von verderblichen Produkten und dem Wiederverschluß desselben Behälters.

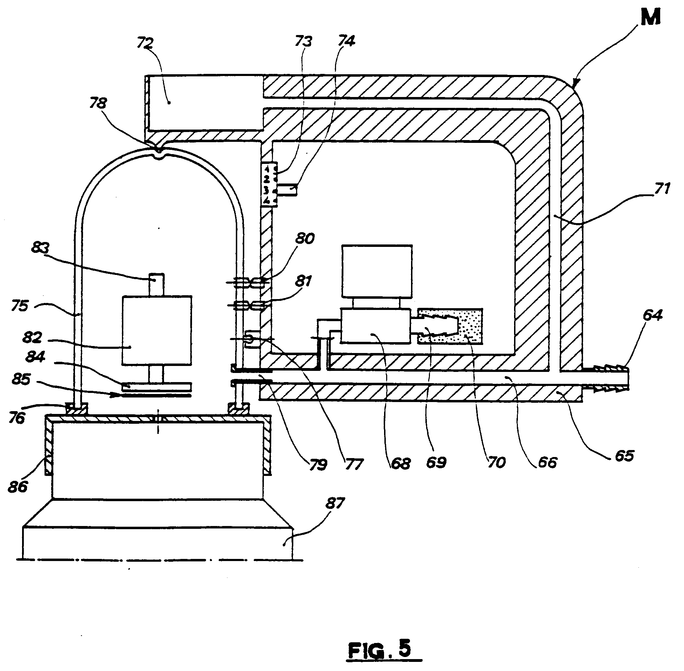

Unter Bezugnahme auf die Fig. 5 sowie auf den Teil C des Schemas der Fig. 1 wird eine hinweisende Lösung der Einrichtung (M) beschrieben, welche mit einer geeigneten Verbindung zur Vakuumanlage der Zelle (C) den Einsatz auf Behälter erlaubt, die sich außerhalb derselben Zelle (C) befinden.

Der Teil (60) stellt eine geeignete Abzweigung vom Ansaugrohr (22) dar, welche den von der Vakuumpumpe erzeugten Unterdruck in die Glocke (75) leiten kann, mit der vorherigen Zwischenschaltung eines Elektroventils (62) und einer Kammer mit Schwimmer (61), deren Funktion im Weiteren beschrieben wird.

Die Abzweigung (60) wird unter Zwischenschaltung des Elektroventils (62) und durch den Austritt aus der Kammer (61) mit einer flexiblen Leitung (63) mit dem Anschluß (64) verbunden, welcher am Boden der tragbaren Einrichtung (M) angebracht ist.

Im Boden (65) ist die Leitung (66) eingebaut, die mit einem Anschluß (67) versehen ist, für den Schnellanschluß der Zubehörteile. Die Leitung (66) ist außerdem mit dem Elektroventil (68) verbunden, mit äußerem Anschluß, eventuell mit Filter (70) und mit der Verbindungsleitung (71) zum Vakuumregler (72), welcher am besten so angebracht wird, daß man ihn im Blick hat, um die Unterdruckverhältnisse ständig kontrollieren zu können.

Auf dem Handgriff der tragbaren Einrichtung (M) ist ein Umschalter (73) angebracht, der vier elektrische Positionen für einen Schaltweg hat und in welchem sich ein Schieber befindet, der einen beweglichen Kontakt (74) hat.

Die tragbare Einrichtung (M) wird durch die Glocke (75) vervollständigt, welche mit einer Kopfdichtung (76) ausgerüstet ist, sowie mit den Verankerungen (77) und (78), damit sie an der vorgenannten Einrichtung (M) befestigt werden kann, weiterhin mit dem Anschluß (79) für die Verbindung mit dem Gegenanschluß (67), und mit einem Paar elektrischer Kontakte (80) und (81), welche in Gegenkontakte eigefügt werden, die eigens dafür auf der Einrichtung (M) vorgesehen sind und die mit dem Umschalter (73) in Verbindung stehen.

Die elektrischen Kontakte (80) und (81) haben die Aufgabe, den in der Glocke (75) befindlichen Elektromagneten (82) anzusprechen, der auf die Welle (83) einwirkt, die den Stempel (84) betätigt, auf welchem provisorisch ein selbstklebendes Etikett (85) aus luftdichtem Material mit der Klebeseite nach unten angebracht ist.

Der Elektromagnet (82) ist mit der Glocke (75) fest verbunden mittels geeigneter, an der Glocke (75) selbst angebrachter Bügel, welche der grafischen Klarheit wegen nicht dargestellt sind.

Der Einsatz der Einrichtung (M) sieht die zeitweilige Loslösung der Versorgung der Zelle (C) mit Unterdruck vor, was mit einer eigens dafür vorgesehen elektrischen Schaltung geschieht, weshalb in der Zelle (C) zeitweilig die vorher bestehenden Unterdruckverhältnisse herrschen, welche jedoch vom Vakuummeter (24) kontrolliert werden, außerdem bleibt die Kühlanlage tätig.

Mit der Umschaltung der Vakuumanlage der Zelle (C) springen automatisch die Vakuumpumpen (50) oder (21) an, damit der Unterdruck für den neuen Einsatz zur Verfügung steht.

Der hermetisch abschließende Deckel (86) des Behälters (87), in dem man den Unterdruck für die Konservierung der darin eingefüllten verderblichen Produkte schaffen will, wurde im Voraus für die Luftabsaugung mit einer Bohrung versehen.

Die Glocke (75) wird auf den Deckel (86) aufgesetzt, mit dem Schieber (74) des Umschalters (73) in Ruhestellung (3), womit jegliche Schaltung ausgeschlossen ist.

Bringt man den Schieber (74) in die Stellung (2), so schließt man damit das Elektroventil (55) und öffnet das Elektroventil (62), und damit beginnt das Absaugen der Luft aus dem Behälter (87).

Ist der gewünschte Unterdruck erreicht, was auf dem Vakuummeter (72) abzulesen ist, bringt man den Schieber (74) in die Stellung (1) des Umschalters (73), womit man das Elektroventil (55) öffnet, so daß die Pumpe leer dreht, und das Elektroventil (62) schließt, womit der im Behälter (87) und in der Leitung unterhalb des Elektroventils (62) erreichte Unterdruck abisoliert wird.

In der Stellung (1) wird auch dem Elektromagnet (82) ein Impuls erteilt, was die Welle (83) in Bewegung setzt, um den Stempel (84) auf den Deckel (86) auflegen zu lassen, wo das Etikett (85) angebracht und somit die Ansaugbohrung verschlosen wird.

Wird der Kontaktschieber (74) in Stellung (4) gebracht, so öffnet sich das Elektroventil (68), durch welches in die Leitungen (67) bis (71) und in die Glocke (75) Aussenluft eindringt, wodurch der Druck ausgeglichen wird, so daß der Deckel (86) von der Glocke (75) abgelöst werden kann.

Die Stellung (1) ist auch mit einem Schaltverzögerer versehen, so daß beim Durchschalten von (1) auf (4) der Kontakt (2) für einige Sekunden nicht anspricht und der Schieber (74) nicht die oben beschriebenen Elektroventile der Stellung (2) in Betrieb setzt.

Die konservierenden Unterdruckverhältnisse im Behälter (87) können aufgehoben werden, indem man den Deckel (86) öffnet oder ganz einfach das Etikett (85) entfernt oder locht, so derselbe Behälter leicht geöffnet werden kann.

Der Vorgang kann jedesmal wiederholt werden, wenn man den Behälter zu öffnen wünscht, um die Menge der darin befindlichen verderblichen Produkte zu verändern; die vorherigen konservierenden Verhältnisse werden wieder hergestellt, womit der derzeitige Nachteil überwunden wird, der es unmöglich macht, nach jedem Öffnen den Unterdruck wieder herzustellen.

Eventuell können auch konservierende Gase eingeführt werden, indem der Gasbehälter mit dem Anschluß (69) verbunden wird und man den Ablauf der oben beschriebenen Vorgänge ändert, d. h., nachdem man mit dem Schieber (74) in Stellung (2) den Unterdruck geschaffen hat; anstatt sofort mit dem Schieber (74) in Stellung (1) das Elektroventil (82) zu betätigen, bringt man ihn vorher in Stellung (4), um das Gas eintreten zu lassen und dann in Stellung (1), um das Etikett anzubringen.

Auch die Stellung (4) ist mit einem Verzögerer verbunden, der den Kontakt (2) für einige Sekunden unwirksam macht, aus den gleichen Beweggründen wie für die Stellung (1) des Kontaktschiebers (74)

Zwischen der Einrichtung (M) und dem Elektroventil (62) wird vorteilhaft der bereits genannte hermetische Behälter (61) eingebaut, der mit einem Schwimmschalter versehen ist, welcher verschiedene Aufgaben hat.

Die erste Aufgabe des Behälters (61) ist die Verzögerung in der Schaffung des Unterdrucks in den Behältern (87), um dem Bedienungspersonal Zeit zu lassen, die Vorgänge zu beobachten.

Die zweite Aufgabe besteht darin, den Eintritt in die Pumpe von irrtümlich angesogenen Flüssigkeiten im Falle eines Fehlers in der vorgehenden Phase zu verhindern. In diesem Falle sammelt sich nämlich die Flüssigkeit im Behälter und hebt den Schwimmer in der Kammer (41), der einen Behälter bewegt und so das Elektroventil (55) öffnet und das Elektroventil (62) schließt, womit ein Rückfließen augenblicklich unterbrochen wird.

## D) WEITERE VERWENDUNG AUSSERHALB DER ZELLE

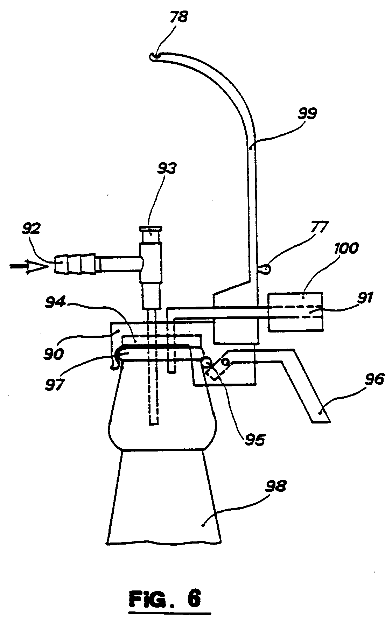

Die in Bezug stehende Einrichtung ermöglicht eine weitere vorteilhafte Verwendung außerhalb der Zelle. Es handelt sich um die Verwendung des von der Vakuumpumpe geschaffenen Unterdrucks für das Umfüllen oder andere Verrichtungen, die sich auf den atmosphärischen Druck beziehen, der auf freistehende Oberflächen von Flüssigkeiten wirkt, gemäß dem von der Fig. 6 dargestellten konstruktiven Beispiel.

In der Fig. 6 ist ein vertikaler Schnitt des "Saugverschlusses" dargestellt, der aus einer zweckmäßig ausgearbeiteten Vorrichtung zum hermetischen Verschließen besteht, und so imstande ist, den von der Vakuumpumpe der bekannten Zelle geschaffenen Unterdruck dazu zu benutzen, um auf Siphons einzuwirken, Flüssigkeiten umzufüllen oder zu heben, welche kleine hydraulische Freifallanlagen speisen, und um andere ähnliche Aufgaben zu erfüllen.

Besondere Vorteile ergeben sich, wenn der Behälter der umzufüllenden Flüssigkeit sich tiefer befindet und nicht bewegt werden kann, wie z. B. eingegrabene Tanks, oder für Flüssigkeiten, die nicht gerüttelt werden und nicht oxydieren dürfen, wie Speiseöle, Weine usw., oder gefährliche Flüssigkeiten, wie Reagentien, Brennstoffe usw.

Der vorgenannte "Saugverschluß" arbeitet nach dem System der theoretischen Niveaudifferenz von Flüssigkeiten in der Art, daß der atmosphärische Druck das Gewicht der zu hebenden Flüssigkeitssäule übersteigt.

Mit Bezug auf die Fig. 6 besteht der sogenannte "Saugverschluß" hauptsächlich aus einer Verschlußvorrichtung (90) an der die mit der Vakuumpumpe in Verbindung stehende Leitung (91), sowie die mit dem umzufüllenden Behäler verbundenen Leitung (92), angebracht sind, auf welcher ein mechanisches Rückschlagventil (93) eingebaut ist, das von Hand geöffnet werden kann.

Die Verschlußvorrichtung (90) hat auch eine hermetisch abschließende Dichtung (94) und einen zylindrischen Stift (95), der vom Hebel (96) betätigt wird, was das Schließen und Öffnen des Verschlusses (90) ermöglicht, indem der zylindrische Stift fest an die Umrandung (97) des Behälters (98) angedrückt wird, welcher die umzufüllende Flüssigkeit aufnehmen soll.

Der "Saugverschluß" (90) kann auch mit Zwischenschaltung der Einrichtung (M) verwendet werden, als Ersatz für die Glocke (75); zu diesem Zweck wird der genannte Verschluß (90) vorteilhaft mit einem Haltebügel ausgerüstet, der es ermöglicht, die Verschlußvorrichtung mittels der Verankerungen (77) und (78) an der Einrichtung (M) zu befestigen.

Der Verschluß (90) kann auch mittels des in den Anschluß (67) gesteckten Stutzens (100) mit der Vakuumpumpe der Zelle (C) verbunden werden und durch den Umschalter (73) und seinen Funktionen (1) bis (4), für Ansaug- und Umfüllfunktionen eingesetzt werden, wie nachstehend beschrieben wird.

Der "Saugverschluß" (90) kann auch getrennt von der Halterung (M) verwendet werden, indem er mit einem Anschluß (100), gleich dem Anschluß (64) versehen werden kann. In diesem Falle kann sein Betrieb auch aus einer anderen Stellung und auch fern vom Anwendungsbereich gesteuert werden.

Mit Bezug auf die konstruktive Lösung der Fig. 6, welche einen Saugverschluß für Flaschen darstellt, um Flüssigkeiten aus einem niedriger stehenden Behälter heraus zu saugen und auf ein höheres Niveau (98) zu bringen, gemäß der im Bezug stehenden Anwendung, wird wie folgt vorgegangen: Man setzt den Saugverschluß (90) auf die Öffnung (97) des Behälters (98) auf, der die umzufüllende Flüssigkeit aufnehmen soll, und befestigt ihn, indem man den Hebel (96) hebt und den zylindrischen Stift (95) festklemmt.

Nun wird der am Anschluß (92) befestigten Ansaugschlauch in den zu leerenden Behälter gesteckt, der Umschalter (73) von der Ruhestellung (3) in die Stellung (2) gebracht, womit das Elektroventil (55) geschlossen und das Elektroventil (62) geöffnet wird; somit beginnt das Ansaugen der Luft aus dem Behälter (98) aufgrund der am Vakuummeter abzulesenden Werte.

Wenn der Unterdruck im Behälter (98) genügend stark ist, um den hydrostatischen Druck zu überwinden, beginnt die Flüssigkeit zu fließen, getrieben vom atmosphärischen Druck.

Ist der Behälter (98) gefüllt, wird der Kontakt (74) des Umschalters (73) wieder in die Stellung (3) gebracht, um den Vorgang zu unterbrechen, dann verschiebt man ihn eventuell in die Stellung (4), um den Druck auszugleichen und um den Saugverschluß abzuheben.

Auf den Behälter (98) kann ein normaler Verschluß angebracht werden, während der Saugverschluß (90), mit dem Schließen des mechanischen Ventils (93), auf einen anderen Behälter (98) gesetzt und der Vorgang schnell wiederholt werden kann, weil der am Anschluß (92) befestigte Ansaugschlauch eingetaucht bleibt.

Der oben beschriebene Einsatz des "Saugverschlusses" ist ganz besonders vorteilhaft für das Umfüllen von empfindlichen Produkten, wie Weinen, Ölen, usw., weil die Übertragung der Flüssigkeit von einem Behälter zum anderen durch lamellare Bewegung erfolgt, ohne Erschütterungen und ohne Kontakt mit mechanischen Teilen von Pumpen oder mit Ähnlichem, also unter optimalen Bedingungen zur Verhinderung von unerwünschten Nebenwirkungen, wie Erschütterung oder Oxydation.

Ein Alternativvorschlag gegenüber der Lösung mit dem Saugverschluß der Fig. 6 ist im Block (D) des Generalschemas in Fig. 1 dargestellt, wo die Aufgabe gestellt wird, Wasser oder andere Flüssigkeiten aus einem Sammelbecken anzusaugen, in welches die Ansaugleitung (92) eingebracht wird, um einen Gebrauchsbehälter durch die Leitung (101) zu füllen, indem man den von der außerhalb der Zelle (C) befindlichen, bereits zur Verfügung stehenden Vakuumpumpe (50) gelieferten Unterdruck benutzt.

Im Anwendungsbeispiel von Block (D) der Fig. 1 wird der Behälter (98) von einem unterdruckfesten Behälter dargestellt, auf welchem ein Saugverschluß (90) angebracht wird, komplett mit Leitung (91), welcher durch das Elektroventil (62 A) mit drei Stellungen A), B), C), mit der Vakuumpumpe in Verbindung steht. Der Weg von A) zu C) ist normalerweise offen, während der Weg B) zu C) normalerweise geschlossen ist.

Das Elektroventil (62 A) ist parallel und alternativ zum Ventil (62) und wird nur dann gebraucht, wenn die Vakuumanlage außerhalb der Zelle (C) und ohne Zwischenschaltung der Einrichtung (M) gebraucht wird.

Auf dem Verschluß (90) ist auch eine Leitung (92) angebracht, welche durch Zwischenschaltung des Rückschlagventils (93) den dichten Behälter (98) mit einem Becken in Verbindung setzt, aus welchem Wasser oder andere Flüssigkeiten entnommen werden sollen.

Derselbe Behälter (98) ist mit einer Leitung (101) versehen, welche über das Rückschlagventil (102) mit dem Gebrauchsbehälter verbunden ist, der für die Aufnahme der umzufüllenden Flüssigkeit bestimmt ist. Der Behälter (98) ist innen mit zwei Schwimmerunterbrechern (103) und (104) ausgerüstet, wobei der Unterbrecher (103) bei niedrigstem Stand der in den Behälter (98) eingegossenen Flüssigkeit und der Unterbrecher (104) bei höchstem Flüssigkeitsstand in Funktion treten.

Wenn im Behälter (98) die Flüssigkeit den niedrigsten Stand hat, dann schaltet der Unterbrecher (103) ein und schließt dadurch das Elektroventil (55) und öffnet den Weg B) - C) mit der folgerichtigen Schließung des Weges A) - C) des Ventils (62 A), womit die Schaffung des Unterdruckes im Behälter (98) beginnt.

Wenn die Flüssigkeit den Höchststand erreicht, schaltet der Schwimmunterdrücker (104), wodurch das Elektroventil (55) und der Weg A) - C) geöffnet werden, mit folgerichtiger Schließung des Weges B) - C) des Elektroventils (62 A).

Durch das Öffnen dieses Weges werden die atmosphärischen Druckverhältnisse wieder hergestellt, was das Öffnen des Ventils (101) ermöglicht, wodurch die Flüssigkeit schwerkraftbedingt in den Gebrauchsbehälter abfließt.

Die im Block (D) der Fig. 1 beschriebene Variante kann auch unabhängig von der Anlage der vorliegenden Erfindung eingesetzt werden, indem sie jedenfalls von einer anderen Vakuumpumpe bedient wird, und z. B. für Notfallanlagen beim Zivilschutz oder auch in anderen Fällen angewendet werden kann, um Wasser abzupumpen.

Aus der bisherigen beispielsweisen Beschreibung ersieht man die synergetischen Vorteile der Konservierung durch die Vereinigung der Kältetechnik mit der ihr untergeordneten Vakuumtechnik für die Konservierung in der Zelle (C), oder auch in außerhalb der Zelle sich befindlichen Behältern von verderblichen Produkten, welche jedenfalls herausgenommen oder wieder eingefüllt werden können, ohne die Notwendigkeit, den gesamten Inhalt sofort zu gebrauchen und den Behälter wegzuwerfen, weil die Konservierungskonditionen jederzeit wiederhergestellt werden können.

Die Realisierung der Zelle (C) erlaubt außerdem, einen einzigen Kapselkompressor zu verwenden, und gewährleistet stabile Konservierungsverhältnisse durch eine in ihr eingebauten Vorrichtung (36), welche deren Beständigkeit reguliert und außerdem die Verwendung der Vakuumanlage für andere vorteilhafte Zwecke auch außerhalb der Zelle ermöglicht.

Die Realisierung der Zelle (C) sieht auch den gesonderten Einsatz der verschiedenen beispielsweise beschriebenen Teile vor, oder auch nur eines Teils, so auch daß die einzelnen Teile für sich oder untereinander kombiniert werden können, und zwar auch in anderen Vakuumanlagen.

Alle diese Erwägungen stelle eine schematische Zusammenfassung dar, um die perfekte Eignung der Erfindung für die vorgesehenen Zwecke zu prüfen.

Die oben beschriebene und beispielsweise skizzierte Zelle für die Konservierung von verderblichen Produkten, kann auch mit anderen konstruktiven Eigenschaften gebaut werden. Als Beispiel sei die Möglichkeit genannt, ein Gehäuse (1) zu realisieren, in welchem ein Teil der Zelle nur für Vakuumbetrieb vorgesehen ist und ein anderer Teil nur für den Kältebetrieb oder auch für eine Zelle, die ausschließlich für Vakuumbetrieb eingesetzt wird, unter Ausschluß der Kältetechnik. Es besteht auch die Möglichkeit, einige Teile auszutauschen, z. B. den Elektromagneten (82) mit einem elektrischen Motor oder einem anderen mechanischen System. Es ist auch möglich, eine Zelle ohne Zusatzeinrichtung zu bauen, indem der Teil, welcher von der Abzweigung (60) ausgeht, weggelassen wird, so wie es auch möglich ist, die Elektroventile, Umschalter und andere Teile der Anlage, dessen andere Vorrichtungen zu ersetzen, welche analoge Funktionen haben.

Diese und andere ähnliche Änderungen verstehen sich in jedem Fall als zur Erfindung gehörend.

## BEZUGSZEICHENLISTE

ZELLE C

| | |
|---|---|
| (01) | Aufbau für die pneumatische Kühlzelle |
| (02) | Roste für die Zelle |
| (03) | Boden für die Zelle |
| (04) | Thermisch isolierte Führungen für die Roste (02) |
| (05) | Thermische Isolation der Zelle |
| (06) | Eingangstür der Zelle |
| (07) | Handgriff der Tür (06) |
| (08) | Isolierung der Tür (06) |
| (09) | Passive Türfüllung (06) |
| (11) | Kompressor für den Kühlumlauf |
| (12) | Behälter für die Kühlflüssigkeit |
| (13) | Kühlkondensator |
| (14) | (a), (b), (c) usw. seitliche Kühlpaneele |
| (15) | oberes Verdampfungspaneel |
| (16) | unteres Verdampfungspaneel |
| (17) | Zuführungsrohr der Kühlflüssigkeit zu den Paneelen |
| (18) | Rückführungsrohr der Kühlflüssigkeit zum Kompressor (61) |
| (20) | Ausflußrohr der Pumpe (11) |
| (21) | Vakuumpumpe |
| (22) | Pneumatische Verbindungsleitung zur Zelle (C) |
| (23) | Filter der Verbindungsleitung (22) |
| (24) | Manometer-Vakuummeter |
| (25) | Ventil für die Verbindung nach außen |
| (26) | Ventil zur Wiederherstellung des Druk- |

kes auf den Griff (7)

VORRICHTUNG ZUR DRUCKREGULIERUNG

(30) Unterdruck-Druckregler mit fester Eichung

(31) Theoretischer Kompressor

(32) Theoretische Vakuumpumpe

(33) Kammer der Zelle (C)

(34) Zeitschaltregler

(35) Leitung zum Differential-Vakuumregler (36)

(36) Kasten des Differential-Vakuumreglers VQS-1

(37) Elektroventil mit direktem Einfluß für VQS-1

(38) Mechanisches By-pass-Ventil

(39) Mechanisches By-pass-Ventil

(40) Sensibles Balgelement

(41) Hermetisch abschließbare Kammer des Kastens (36)

(42) Hebel des Balges (40)

(43) Elektrischer Kontakt für den Mindestdruck

(44) Elektrischer Kontakt für den Höchstdruck

(45) Umschalter für die Kontakte (43) und (44)

SYSTEM ZUR BILDUNG EINES VAKUUMS

(50) Vakuumkapsel/Kapselkompressor

(51) Schmierölsammelgefäß

(52) Filter für das Schmierölsammelgefäß

(53) Elektroventil auf dem Ausflußrohr (20)

(54) Ölsammeltrichter für Ölbehälter (51)

(55) Elektroventil zur Entleerung des Ölbehälters (51)

(56) Elektroventil auf der Ansaugleitung (22)

(57) Elektrischer Hauptschalter

(58) Schalter für Zeitregler (34)

VORRICHTUNG FÜR DEN EINSATZ AUSSERHALB DER ZELLE (C) MIT DER EINRICHTUNG (M) ZUR ERZEUGUNG VON VAKUUM IN BEHÄLTERN

(60) Abzweigung von der Ansaugleitung (22)

(61) Kammer mit Schwimmerschalter

(62) Elektroventil der Abzweigung (60)

(63) Elastische Verbindung

(64) Verbindungsstück für das Gerät (M)

(65) Deckel des Gerätes (M)

(66) Zuführleitung zur Glocke (75)

(67) Anschluß an die Glocke (75)

(68) Elektroventil zur Verbindung nach außen

(69) Äußerer Anschluß an den Filter (70)

(70) Filter der Verbindung nach außen

(71) Leitung für das Vakuummeter (72)

(72) Vakuummeter für den Betriebsunterdruck

(73) Umschalter mit 4 Stellungen

(74) Kontaktschieber

(75) Pneumatische Glocke

(76) Dichtung für die Glocke (75)

(77) Untere Verankerung der Glocke (75)

(78) Obere Verankerung der Glocke (75)

(79) Pneumatischer Anschluß zur Glocke (75)

(80) Elektrischer Kontakt für den Elektromagnet (82)

(81) Elektrischer Kontakt für den Elektromagnet (82)

(82) Elektromagnet für Etikettierers

(83) Welle des Etikettierers

(84) Stempel des Etikettierer

(85) Pneumatisch dichtes Etikett

(86) Gelochter Deckel für den Behälter (87)

(87) Behälter für die Aufbewahrung unter Vakuum

WEITERER ÄUSSERER EINSATZ MIT SAUGVERSCHLUSS

(90) Verschlußvorrichtung

(91) Vakuum-Zufuhrleitung

(92) Verbindungsleitung des Umfüllbehälters

(93) Mechanisches Rückschlagventil auf der Leitung (92)

(94) Dichtung der Verschlußvorrichtung (90)

(95) Zylindrischer Stift für den hermetischen Verschluß der Vorrichtung (90)

(96) Betätigungshebel für den Stift (95)

(97) Erhöhte Umrandung des Behälters (98)

(98) Behälter für die Umfüllflüssigkeit

(99) Haltebügel des Saugverschlusses (90)

(100) Anschlußstutzen für die Leitung (91) an den Anschluß (79)

(101) Zuleitung zum Gebrauchsbehälter

(102) Rückschlagventil für die Leitung (101)

(103) Schwimmunterbrecher für den niedrigsten Flüssigkeitsstand

(104) Schwimmunterbrecher für den höchsten Flüssigkeitsstand

**Patentansprüche**

1. Zelle für die Konservierung von verderblichen Produkten mit einer dem Kühlkreislauf untergeordneten Vakuumanlage, mit Differential-Vakuumregler und mit einer Einrichtung für den Einsatz des Vakuums in außerhalb der Zelle befindlichen Behältern, dadurch gekennzeichnet, daß sie aus einem schachtelförmigen Gehäuse besteht, das mit einer hermetisch verschließbaren und thermisch isolierten Tür versehen ist, in welches ein herkömmlicher Kühlkreisumlauf eingebaut ist, zusammen mit einer Vakuumanlage, die mit ihm in elektrischer Verbindung steht, um den Betrieb der Vakuumanlage den Kühlverhältnissen unterzuordnen, mit der Möglichkeit, in der Zelle die gewünschten thermischen und Unterdruckverhältnisse wiederholt zu erzeugen, so daß in derselben Zelle vorzugsweise mit der Vakuumtechnik, verderbliche Prokukte aufbewahrt werden können, die sonst in Behälter eingeschlossen werden müßten, welche nur einmal wieder geöffnet werden können, da die Vakuumanlage vom gleichen entsprechend abgeänderten Kapselkompressor bedient wird und eine geeignete Vorrichtung besitzt, um die Vakkumverhältnisse konstant zu halten sowie die Möglichkeit zu schaffen, die Vakuumanlage auch außerhalb der Zelle zu verwenden.

2. Zelle für die Konservierung von verderblichen Produkten gemäß Anspruch 1, dadurch gekennzeichnet, daß Verdampfungspaneele (14), (15) und (16) die Wärme entziehen, indem sie vorerst die konvektiven Bewegungen der Luft benutzen, bevor die Vakuumverhältnisse geschaffen sind, nachfolgend mit den konvektiven Bewegungen der Restluft und durch Ableitung und/oder Abstrahlung, wenn einmal die Unterdruckverhältnisse geschaffen sind, um schließlich die beste Verbindung der beiden Konservierungstechniken mit dem kleinsten energetischen Aufwand zu erreichen.

3. Zelle für die Konservierung von verderblichen Produkten gemäß Anspruch 1 und 2, dadurch gekennzeichnet, daß die Vakuumanlage von einem gleichen Kapselkompressor bedient werden kann, wie er für den Kühlkreislauf in Einsatz kommt, um an seinem Ansaugstutzen einen Unterdruck von etwa 40 Millibar zu erreichen, wobei dieser Kapselkompressor (50) ein Ausflußrohr (20), auf welchem ein Elektroventil (53) angebracht ist, eine Ansaugleitung (22) mit einem Elektroventil (56), eine Leitung oder Gefäß (51) als Verbindung zwischen den Leitungen (20) und (21) aufweist, wobei das Gefäß (51) die Aufgabe hat, das schwerkraftbedingt einfließende Schmieröl des Kompressors (50) zu sammeln, mit einem Elektroventil (55), um das vom Gefäß (51) gesammelte Öl durch die Leitung (22) wieder dem Kompressor (50) zuzuführen, ohne den Kompressor im Leerlauf drehen zu lassen, im Falle der gleichzeitigen Schließung der Elektroventile (53) und (56).

4. Zelle für die Konservierung von verderblichen Produkten gemäß Anspruch 3, dadurch gekennzeichnet, daß das Einschalten der Elektroventile (53), (55) und (56) von einem Zeitschalter (34) geregelt wird, der sich beim Einschalten des Hauptschalters in Wartestellung begibt, um dann durch das Einschalten eines Schalters (58) den Pumpen-Kompressor und die Elektroventile (53), (55) und (56) für die Funktionen des Entleerens, des By-pass und der Ansaugung in Aktion zu setzen.

5. Zelle für die Konservierung von verderblichen Produkten gemäß Anspruch 1 und 4, dadurch gekennzeichnet, daß sie ein Reguliersystem für den Unterdruck oder für den absoluten Druck aufweist mit einer Vergleichsvorrichtung auf der Leitung (22) um die absoluten Druckverhältnisse zu messen, die in einer Kammer (33) beim Abschalten des Kompressors (50) herrschen und durch seine elektrische Verbindung zum Zeitschaltregler (34) die Einschaltung des aktiven Elementes des pneumatischen Kreislaufes ermöglicht.

6. Zelle für die Konservierung von verderblichen Produkten gemäß Anspruch 5, dadurch gekennzeichnet, daß die Vergleichsvorrichtung aus einem Gehäuse (36) mit Anschluß (35) besteht, der die von der Leitung (22) aufgenommenen Druckwerte über ein von demselben Zeitschalter (34) gesteuertes Elektroventil (37) einer hermetischen Kammer (41) überträgt,durch das Schließen desselben bewirkt eine etwaige Druckdifferenz zwischen Kammer (41) und Anschluß (35) eine axiale Bewegung eines Balges oder eines anderen sensiblen Elementes(40), der den Umschalter (45) auf den Kontakt (44) umstellt, womit die Vakuumpumpe (31) für eine vorbestimmte und auf dem Zeitschalter (34) eingestellte Zeit in Betrieb gesetzt wird.

7. Zelle für die Konservierung von verderblichen Produkten gemäß Anspruch 5 und 6, dadurch gekennzeichnet, daß die Reguliervorrichtung (36) in den pneumatischen Kreislauf derselben Zelle eingefügt werden kann mit Einsatz des abgeänderten Kapselkompressors, um die Aufgaben der Pumpe (31) und/oder des Kompressors (32) zu übernehmen, wobei in jedem Falle die Reguliervorrichtung auch für pneumatische Anlagen verwendet werden kann, die von derselben Zelle unabhängig sind.

8. Zelle für die Konservierung von verderblichen Produkten gemäß Anspruch 1, dadurch gekennzeichnet, daß die Vakuumanlage dazu verwendet werden kann, um durch eine Leitung (60) unter Zwischenschaltung eines Elektroventils (62), mit einem geeigneten Schwimmunterbrecher, der im hermetischen Sicherheitsbehälter (61) eingebaut ist, eine Einrichtung (M) zu betätigen, mit welcher außerhalb der Zelle (C) die Unterdruckverhältnisse in Behältern geschaffen und wieder hergestellt werden können, die verderbliche Produkte zur Aufbewahrung bei Umwelttemperatur enthalten, oder für die nachträgliche Wiederauffüllung bei tieferen Konservierungstemperaturen.

9. Zelle für die Konservierung von verderblichen Produkten gemäß Anspruch 8, dadurch gekennzeichnet, daß die Einrichtung (M) aus einer Halterung mit Boden (65) besteht, mit einer Leitung (66), um den Unterdruck zu einem Anschluß (67) und zu einem Elektroventil (68) zu leiten, welches mit einem Filter (70) ausgerüstet ist, der auf seiner äußeren Ansaugleitung (69) angebracht ist, außerdem mit einer mit dem Vakuummeter (72) verbundenen Leitung (71), mit einem Anschluß (67), der mit einer pneumatischen Glocke (75) verbunden ist, welche einen Stempel (84) enthält, der ein Etikett (85) trägt und mit einem elektrischen Umschalter (73) mit vier Stellungen für ebensoviele Arbeitsgänge.

10. Zelle für die Konservierung von verderblichen Produkten gemäß Anspruch 8 und 9, dadurch gekennzeichnet, daß die pneumatische Glocke (75) auf den gelochten Deckel (86) des zu behandelnden Behälters (87) aufgesetzt ist, um daraus mit der Vakuumanlage der Zelle (C) die Luft abzusaugen und um das Anbringen des Etiketts (85) auf den gelochten Deckel (86) zu veranlassen, damit die Dauer der im Behälter (87) bestehenden Unterdruckverhältnisse gewährleistet bleibt, mit der Möglichkeit, die atmosphärischen Verhältnisse in der Glocke (75) wieder herzustellen, damit sie von dem Verschluß (86) abgenommen werden kann.

11. Zelle für die Konservierung von verderblichen Produkten gemäß Anspruch 1, dadurch gekennzeichnet, daß die Vakuumanlage derselben Zelle (C) mit einer außerhalb der Zelle befindlichen Abzweigung (60) dazu verwendbar ist, um mit einem Saugverschluß (90), der auf dem Behälter angebracht ist, Umfüllvorgänge vorzunehmen, wobei der Verschluß (90) mit einer Leitung (91) ausgerüstet ist, welche mit einem Anschluß (100) mit dem Anschluß (67) der Einrichtung (M) verbunden ist, um im Behälter (98) Unterdruckverhältnisse zu schaffen, und mit einer Leitung (92) versehen ist, welche in den Behälter einmündet, aus dem umgefüllt werden soll, und mit einem mechanischen Rückschlagventil (93), um den Rückfluß in den Behälter (92) zu verhindern.

12. Zelle für die Konservierung von verderblichen Produkten gemäß Anspruch von 8 bis 11, dadurch gekennzeichnet, daß die Einrichtung (M) selbständig oder zusammen mit anderen Vakuumanlagen verwendbar ist, um gleichartige Funktionen zu erfüllen.

13. Zelle für die Konservierung von verderblichen Produkten gemäß Anspruch 8 und 11, dadurch gekennzeichnet, daß an der Abzweigung (60) der Vakuumanlage der Zelle (C) ein Unterdruckbehälter mit Saugverschluß (90) angebracht ist, an dem eine Leitung (91) angebracht ist unter Zwischenschaltung eines Dreiwegventiles (62 A), indem der Verschluß (90) auch eine Leitung (92) aufweist, welche unter Zwischenschaltung eines mechanische Rückschlagventils (93) mit einem Entnahmebecken in Verbindung steht für das Einfüllen von Flüssigkeiten in den Behälter (98), welcher durch die Verbindung mit der Pumpe (50) der Zelle (C) pneumatisch in Unterdruck versetzt worden ist, weil sich in demselben Behälter (98) ein Unterbrecher für den minimalen Flüssigkeitsstand (103) befindet, der die Schließung des Ventils (55) und die Öffnung des Weges (B) - (C) des Ventils (62 A) veranlaßt, um den Unterdruck zu schaffen, und einen Unterbrecher für den maximalen Flüssigkeitsstand (104), der die Öffnung desselben Ventils (55) mit der Öffnung des Weges (A) - (C) des Ventils (62 A) veranlaßt, wobei die atmosphärischen Verhältnisse wieder hergestellt werden.

14. Zelle für die Konservierung von verderblichen Produkten gemäß Anspruch 13, dadurch gekennzeichnet, daß die Umfüllvorrichtung zwischen dem externen Becken und dem Gebrauchsbehälter unter Zwischenschaltung eines Sammelbehälters (98) mit einem Schalter für Niedrigst- und Höchststand an einer anderen Unterdruckanlage angebracht werden kann, welche von der Anlage der Zelle (C) unabhängig ist.

FIG. 1

14

**FIG. 2**

**FIG. 3**

**FIG. 4**

**FIG. 5**

FIG. 6

**FIG. 7**